# EUROPEAN PATENT APPLICATION

(11) **EP 1 314 523 A2**
(43) Date of publication of application: **28.05.2003**
(21) Application number: 02025592.3
(22) Date of filing: 15.11.2002
(51) Int. Cl.: B28D 1/02, C09K 3/14

(54) **Method for obtaining an abrasive mixture, particularly for sawing marbles, and product obtained thereby**

(30) Priority: 27.11.2001 IT TV20010155
(71) Applicant: Pometon S.p.a., 30171 Venezia - Mestre (Prov. of Venezia) (IT)
(72) Inventor: Bellin, Giovanni, 30030 Mira (Prov. of Venezia) (IT)
(74) Representative: Modiano, Guido, Dr.-Ing.

(57) **Abstract**

A method for obtaining an abrasive mixture, particularly suitable for use in sawing stone, for example by means of multiblade frames comprising a step in which stainless chromium steel shot is obtained, the shot being appropriately selected according to a chosen shape and size, the shot being then mixed at least with a chosen amount of lime and water, so as to obtain said abrasive mixture.

The sawing apparatus for carrying out the method.

## Description

The present invention relates to a method that can be carried out to produce an abrasive mixture that is particularly suitable for use in sawing marbles and stone.

The term "sawing" is used to describe the reduction of large blocks of materials, such as for example marbles, granites and stones, to slabs.

These terms designate commercially materials of mineral origin that are commonly used in slab form, for ornamental purposes, for example to cover floors, internal and external walls of buildings, or for funeral use (tombstones, gravestones, et cetera).

The term "marble" is used here to reference not only a certain kind of material having a crystalline structure but also generically materials having a non-crystalline structure, limestones, breccias or other similar materials.

In particular, the term "marbles" is used to designate all polishable materials, including silicate-based ones, whose mineral constituents have hardnesses of no more than 4-5 in the Mohs scale, such as marbles proper (Carrara, Lasa, arabesque, Pentelic, Candoglia, Fior di Pesco, Carnico), polishable limestones (Botticino, Arabescato orobico), organogenic limestones (Rosso di Verona, Aurisina, Repen, Chiampo), breccia limestones (Portoro, Paonazzo) and travertines, serpentines and green marbles.

These materials usually have a light color and a surface structure that is more or less porous depending on their particular origin.

Likewise, the term "granites" is used to designate all polishable materials whose mineral constituents have hardnesses of more than 6-7 in the Mohs scale, such for example granites proper (Rosa Baveno, Sardegna, Porrino), syenites, gneiss (Serizzo) and quartzites.

These materials usually have a darker color than marbles and since they are very hard they also have a more compact and smooth surface structure.

Likewise, the term "stones" generally includes building stones that cannot be polished or are difficult to polish, such as porphyries, sandstones, marls and basalts.

*Table I* lists the values for converting between the main hardness scales and particularly between the Mohs scale, which is the most widely used one in the stone sector, and the Knoop, Brinell and Vickers scales, which are used commonly in the field of metals.

Each one of these three categories contains various kinds of stones, which differ in terms of color, veins, physical characteristics such as hardness, mechanical strength, wear resistance, frost resistance and many others, which are in any case suitable for ornamental use because of their characteristics and after various treatments.

One of the main treatments to which stone is subjected is indeed sawing.

**TABLE I:**

| Hardness scale | | | | |
|---|---|---|---|---|
| MINERAL | MOHS | KNOOP | BRINELL | VICKERS |
| Talc | 1 | 200 | 2 | 2.4 |
| Gypsum | 2 | 400 | 32 | 36 |
| Calcite | 3 | 1200 | 105 | 110 |
| Fluorite | 4 | 1750 | 160 | 190 |
| Apatite | 5 | 4300 | 500 | 540 |
| Orthoclase | 6 | 6100 | 750 | 800 |
| Quartz | 7 | 8300 | 1050 | 1120 |
| Topaz | 8 | 13000 | -- | 1120 |
| Corundum | 9 | 20000 | -- | 2000 |
| Diamond | 10 | 75000 | -- | 10000 |

The sawing process consists in the processing of blocks of material having a large volume, generally three to twelve cubic meters, suitable to obtain slabs with surfaces measuring several square meters and thicknesses of usually two or three centimeters that can however reach twenty or thirty centimeters.

Currently, three main sawing techniques are known and each one uses a different type of machine.

A first machine consists of a supporting frame for a plurality of mutually parallel metallic blades, commonly known as multiblade frame.

These blades, whose number generally varies between twenty-five and one hundred, have along their lower edge diamond inserts suitable to cut into the upper surface of the block of material to be cut.

The blades are moved into contact with the block and then moved longitudinally by means of one or more electric motors connected to the frame by virtue of a mechanical transmission system for example of the rod-and-crank type.

The operation described here is performed in the presence of water, so as to cool the tools and remove the waste material.

The multiblade frame with diamond blades described above is commonly used to cut marbles, since diamond inserts are poorly suitable for use for sawing granites.

A second machine for sawing stone materials, particularly granites, is constituted by a multiblade frame commonly known as an abrasive slurry frame.

The term "abrasive slurry" or "abrasive mixture" designates a mixture of water, lime and steel shot.

This abrasive mixture, poured abundantly onto the blades and onto the block of material being treated, allows to perform reduction to slabs by using metal blades having no diamond inserts, since the sawing action is performed by the steel shot contained in the abrasive mixture, which by being entrained by the movement of the blade produces friction against the granite and cuts it.

To perform effective sawing, the abrasive mixture must be renewed continuously, since the friction leads to rapid degradation of the steel shot.

In particular it is known to produce abrasive mixtures that comprise steel shot that is in turn constituted by spherical and predominantly sharp-edged or prism-like bodies made of carbon steel and have a particle size distribution comprised between 0.3 and 1.5 millimeters.

In addition to these substances, the abrasive mixture usually comprises waste from the cut granite and fragments of the metal blades.

The known abrasive mixture or slurry is therefore constituted by a suspension of solid substances in a saturated aqueous solution of calcium hydroxide Ca(OH)₂ (commonly termed lime) to obtain a basic saturated solution, with a pH of approximately 12.

The carbon steel used in the known type of abrasive mixture has a metallographic structure constituted by fine martensite and has a hardness that is approximately equal to, or greater than, 64 HRC (according to the unit of measure termed *Rockwell C);* chemical analysis yields the results shown in *Table II*.

**TABLE II:**

| Chemical analysis of carbon steel | | |
|---|---|---|
| ELEMENT | RANGE | TYPICAL VALUE |
| Carbon | 0.7-1.1% | 0.86% |
| Silicon | 0.5-1.1% | 0.80% |
| Manganese | 0.7-1.0% | 0.80% |
| Phosphorus | Maximum 0.05% | 0.03% |
| Sulfur | Maximum 0.05% | 0.03% |

The multiblade abrasive slurry frames described here are generally considerably larger than diamond blade frames and comprise as many as two hundred blades, and have a transmission system that produces an oscillating motion of said blades.

A third machine for sawing stone is constituted by a diamond wire frame, which comprises a plurality of parallel wires, usually up to ten, in which diamond beads are embedded.

These wires are made to slide over the block to be cut by virtue of large motorized rollers, which not only move the wires but also keep them correctly tensioned.

A diamond wire frame can be used both to cut marbles and to cut granites; however, it has the drawback that it is not suitable, owing to its configuration, to achieve large-scale slab production.

Vice versa, the above described multiblade frames are suitable for large-scale processes, but each one is dedicated to a specific type of stone: in particular, diamond blade frames can be used, as mentioned, only with marbles, while abrasive slurry frames are used almost exclusively for sawing granites.

This is due to the fact thatiduring the sawing of the stone, impurities remain associated along the sawing surfaces; such impurities are constituted by fragments of the steel shot used in the abrasive mixture, which almost always remain even after the washing step to which the slabs are subjected.

Over time, these impurities, exposed to air and humidity and often also to the action of atmospheric agents, undergo an oxidation that leads to the forming of very unsightly vertical streaks.

This phenomenon is almost fully negligible in the case of granites, since the hard and compact structure of this type of stone does not facilitate adhesion or permanence after washing of the steel shot fragments on the sawing surfaces.

This drawback is instead very harmful in the case of marbles, particularly as regards white or light-colored marbles, or for all marbles that have a high surface porosity, such as for example Trani marble and travertine.

In these cases, unsightly streaks or rust marks inevitably form and fully compromise the aesthetic pleasantness of the slabs, forcing their frequent replacement.

This phenomenon is worsened by the fact that the steel shot that is used is mainly composed of grains having a sharp-edged shape and a very high hardness.

Accordingly, during the sawing of materials that are not very hard, these grains produce microscopic incisions along the sawing surfaces that worsen the surface finished of the slabs but most of all cause the adhesion of the small metal fragments, which are difficult to remove during washing, that cause the forming of the above described rust streaks.

The main drawback of these known types of device for sawing stone is therefore the fact that the sawing of marbles and granites requires the presence of at least two kinds of multiblade frame and therefore of one or more frames of abrasive mixture type and one or more frames of the type with diamond blades, with consequent high production costs owing to the amortization of the machines and to the costs of maintaining them.

Another drawback of the known art is the fact that the utilization of these plants is often less than optimum, since market demand for large amounts of marbles rather than granites leads to periods of inactivity of the abrasive slurry frames or of the diamond blade frames.

If one nonetheless chooses to use an abrasive slurry frame to cut a quantity of marbles, there is the already-mentioned problem of obtaining slabs that over time will be severely spoiled from the aesthetic standpoint, which is fundamentally important in the use of these products.

The aim of the present invention is therefore to solve the noted technical problems, eliminating the drawbacks of the cited known art by providing a method that allows to obtain an abrasive mixture, particularly for multiblade frames, that allows to cut not only granites but also marbles, therefore avoiding the formation of iron oxide (rust) streaks over time.

Within this aim, an object of the invention is to provide a method that allows to cut, with a single apparatus, all kinds of stones, with a consequent economic advantage for businesses in this field, which would thus require a single type of apparatus.

Another object is to provide an invention that allows optimum utilization of the machines and apparatuses, regardless of the variations in the demand of marbles rather than granites.

A further object is to provide a method that allows to perform even simultaneous sawing, in a single frame pass, of marbles and granites, accordingly allowing to saturate to the maximum possible extent the capacity of every frame.

Another object is to reduce the blocks of stone to slabs that have an optimum surface finish and are thus easily washable and at the same time have a highly pleasant aesthetic appearance.

Another object is to provide a method that is simple and at the same time allows to use known kinds of machine so as to contain costs.

This aim and these and other objects that will become better apparent hereinafter are achieved by a method for obtaining an abrasive mixture, particularly for sawing stone, characterized in that it comprises, even in a different sequence, the steps of:
-- producing stainless chromium steel shot;
-- selecting said shot according to a chosen shape and size;
-- mixing said shot at least with a chosen amount of lime and water, so as to obtain said abrasive mixture.

The product thus obtained is constituted by an abrasive mixture that comprises an amount of lime and water, characterized in that it comprises shot that is potato-shaped, has a maximum dimension of less than 1.4 millimeters, and is made of stainless chromium steel.

Further characteristics and advantages of the invention will become better apparent from the description that follows, which describes the structure and the operation of a particular multiblade frame, and a possible method for obtaining the invention, which is illustrated only by way of non-limitative example in the accompanying drawings, wherein:
Figure 1 is a schematic view of a sawing apparatus constituted by a multiblade abrasive slurry frame;

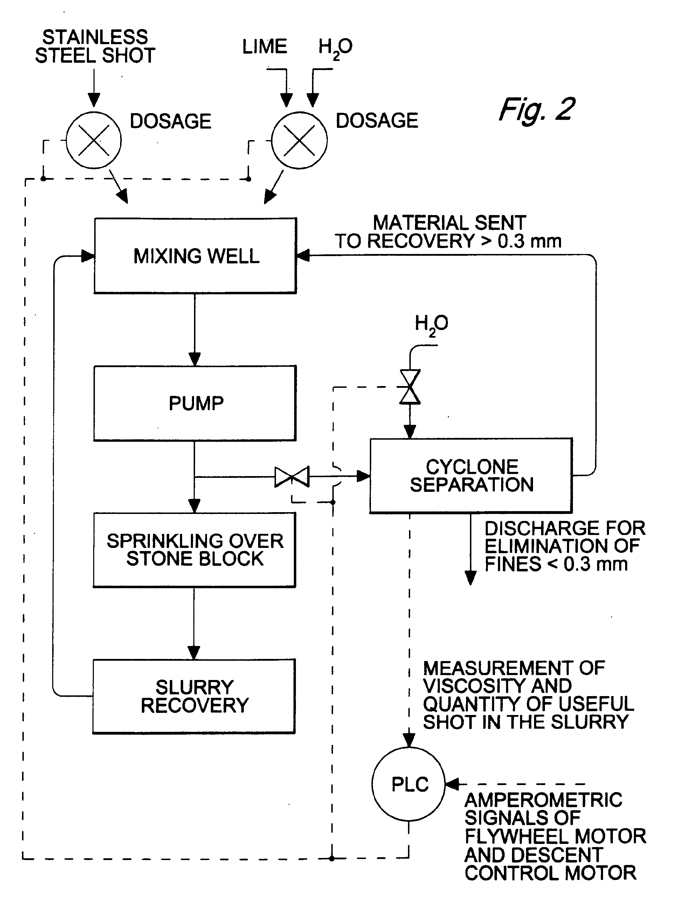

Figure 2 is a block diagram of the operating principle of the sawing process by means of a multiblade abrasive slurry frame.

With reference to the figures, the reference numeral 1 designates a multiblade abrasive slurry frame, which comprises a flywheel 2 driven by a first motor designated by the reference numeral 3.

By means of a rod-and-crank system and of guiding on appropriate oscillating elements, designated by the reference numeral 4, the flywheel 2 imparts an oscillating motion to a plurality of metallic blades 5 which are arranged in succession parallel to each other so as to lie on a plane that is parallel to the upper surface of the block 6 of material to be reduced to slabs.

Guiding on the oscillating elements 4 forces the blades to perform a pendulum-like motion that ensures greater effectiveness in the sawing action.

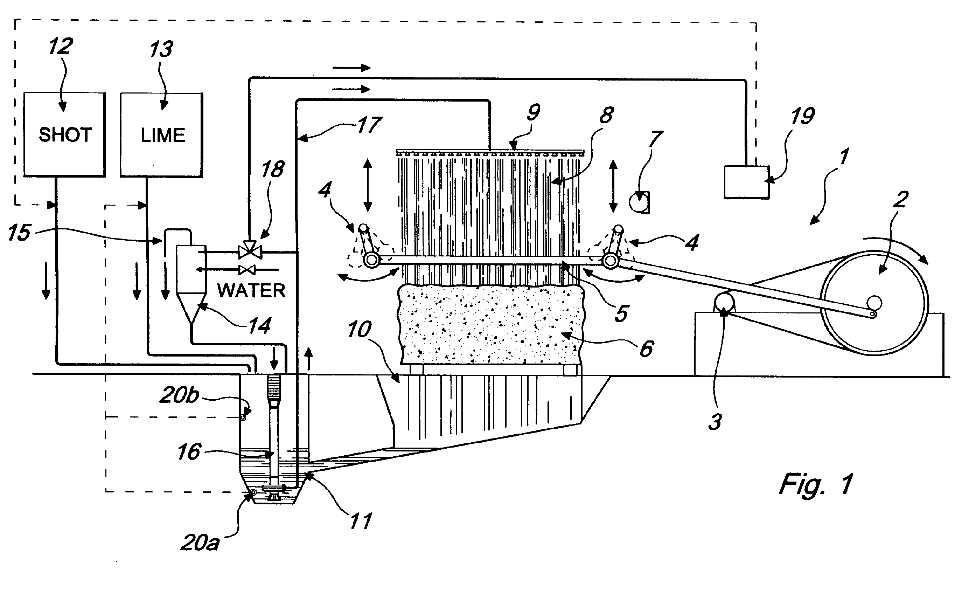

The assembly constituted by the oscillating elements 4 and the blades 5 can be moved vertically by virtue of at least one second motor, designated by the reference numeral 7, commonly known as slow lowering motor, since it is meant to lower the blades 5 as the sawing of the block 6 into slabs advances; Figure 1 does not illustrate the connection between the second motor 7 and the oscillating elements 4, which in any case occurs by virtue of motion transmission means of a known type.

The sawing action of the blades 5 occurs by virtue of the presence of an abrasive slurry or mixture poured onto the block 6 and within the sawing grooves during their forming.

The abrasive mixture must be renewed continuously; Figure 1 illustrates a falling stream of abrasive mixture, designated by the reference numeral 8, which is obtained by virtue of the presence of a sprinkler, designated by the reference numeral 9 and arranged above the set of blades 5.

The abrasive mixture used is conveyed into a recovery tank, designated by the reference numeral 10, which is provided below the block 6 and is sent from there to a collection well 11.

A chosen amount of steel shot that arrives from a first tank 12 and of lime that arrives from a second tank 13 and an amount of water and a recovered mixture also merge in the well 11. The recovered mixture arrives from a centrifugal device, also known as cyclone separator and designated by the reference numeral 14, that is suitable to discharge the waste of the processed material and fragments of the blades 5 and of the previously used steel shot.

The cyclone separator 14 allows to eliminate the fines, with dimensions advantageously smaller than 0.3 millimeters, through a first discharge duct, designated by the reference numeral 15.

The mixture that is present in the collection well 11, constituted by a suspension of steel shot in a saturated aqueous solution of calcium hydroxide (also known as lime milk), with the presence of additional materials, such as waste from the processed material and fragments of the blades and of the shot used, accidentally recovered by means of the recovery tank 10.

In this step, it is possible to add advantageously an amount of clay-like material, such as for example an amount of bentonite, suitable to improve the descent and consumption of the steel shot, furthermore allowing to wash more easily the slabs at the end of the sawing operation.

The water added by means of the cyclone separator 14 must be such as to keep the viscosity of the mixture that is present in the well 11 within a range of values comprised between approximately 1.5 and 1.8 times the value of the viscosity of water.

At the same time, the density is between approximately 1.5 and 1.6 kilograms per cubic decimeter.

The mixture obtained in the well 11 is conveyed, by means of a pump 16, for example of the centrifugal type, into a second duct 17 for connection to the sprinkler 9.

The second duct is controlled by a valve 18, such as a valve of the three-way type, which is suitable to control the recirculation of a fraction of the flow-rate of mixture within the cyclone separator 14 and the sending of a separate fraction of the mixture to an analyzer, designated by the reference numeral 19, that is suitable to control the inflow of steel shot from the first tank 12 to the well 11 according to the viscosity and iron concentration of the drawn sampling mix.

The inflow of lime from the second tank 13 to the well 11 is instead preferably controlled by means of a pair of level probes, designated by the reference numerals 20a and 20b, which are arranged respectively in the lower region and in the upper region of the well 11, so as to adjust the quantity of mixture that is present in the well.

*Table III* lists the typical quantities to be mixed for each liter of water, depending on the stone to be processed.

**Table III:**

| Basic composition of the abrasive mixture | | |
|---|---|---|
| COMPONENT | For MARBLE/STONE | For GRANITE |
| Lime | 2-3 g/l | 15-20 g/l |
| Steel shot | 50 - 80 g/l | 200 - 300 g/l |

The steel shot used in this treatment is obtained by means of a method that is described hereinafter by way of non-limitative example in a particular embodiment thereof.

A first step provides for the use of industrial furnaces, such as for example melting or induction or arc furnaces, in order to obtain a liquid phase of stainless steel or carbon steel scrap.

This liquid mixture of metal receives the addition of chosen quantities of materials constituted by alloys of iron, such as for example metallic alloys of ferronickel, ferrochrome, ferrosilicon, ferromanganese, ferrosilicomanganese, ferroboron and ferrotitanium.

Moreover, additives such as graphite, coke and/or dolomite are added so as to obtain a liquid phase that has the intended chemical analysis, an example of which is given in *Table IV*.

In addition to the listed components there can be impurities of elements such as sulfur, nitrogen or arsenic, which must be conveniently contained since they cause a degradation of the characteristics of the steel.

**TABLE IV:**

| Chemical analysis of chromium steel | | |
|---|---|---|
| ELEMENT | RANGE | TYPICAL VALUE |
| Carbon | 0.05 - 0.5 % | 0.25% |
| Chromium | 8 - 30 % | 14% |
| Silicon | 0.9 - 3.0 % | 1.8% |
| Nickel | 5% maximum | 1.0% |
| Manganese | 2% maximum | 0.3% |

The melting process continues until a uniform liquid phase is obtained which has a temperature that is suitable for the subsequent granulation process: the final temperatures are usually between 1500 and 1580 °C.

When these temperatures are reached, the liquid steel thus obtained is poured into a ladle, and from there the steel is slowly poured into an appropriate granulation tank, in which there is a jet of high-pressure fluid suitable to perform granulation, i.e., the reduction to solid particles, of the poured molten steel.

The fluid used for granulation can be constituted, for example, by a jet of water at a pressure between 2 and 15 bar, or by a jet of air or inert gas at the pressure of approximately 0.5 - 3 bar.

The molten steel column that leaves the ladle is reduced by the jet into a quantity of minute droplets that once cooled form stainless chromium steel shot.

The steel shot thus obtained is then subjected to a screening operation by means of suitable devices such as rotary sizing devices or vibrating screens, so as to obtain a division into particle size classes that can be used in each instance according to the particular type of application.

In any case, the steel shot that has average dimensions of less than approximately 0.2 mm or average dimensions of more than approximately 1.4 millimeters is put to one side and used as raw material for remelting.

The remaining steel shot is subjected to a mechanical treatment that is performed for example in devices such as rotary-disk mills.

This treatment is performed by introducing the steel shot in these devices, which are internally provided with a metal disk that rotates at high speed (approximately 1500 to 3000 rpm).

Due to the centrifugal force, the chromium steel granules are propelled against the walls of the mill according to their average density: in this manner, one achieves a selection that is suitable to eliminate the granules that are suitable in terms of particle size but defective from the point of view of structural integrity because they have, for example, cavities or eddies.

At the same time, the treatment in the rotary-disk mills allows to modify the shape of the granules, making it more suitable for use in the field of sawing.

The product thus obtained is then usually packaged, so that it can be shipped easily to the site where it is to be used, where the multiblade abrasive slurry frame stands.

The resulting stainless chromium steel shot has a rounded shape that is approximately potato-like and is the direct consequence of the preset chemical composition, of the temperature of the poured liquid steel, of the type of fluid used for granulation, of the pressure and shape of the resulting liquid or gaseous jet, and of the shape of the shot collection tank and of the mechanical treatments to which said tank it is subjected.

Such rounded shape, from which spikes can protrude slightly due to the considerable percentage of chromium in the steel, is the optimum shape for sawing stone.

In particular, the average hardness of the resulting shot, which corresponds to a value that is slightly higher than 40 HRC, is particularly suitable for treating stone that is particularly soft or has natural fissures, since one obtains a very clean cut and slabs that have a high surface finish.

It has thus been found that the invention has achieved the intended aim and objects, a method having been devised that allows to obtain an abrasive mixture that can be used in multiblade frames and allows to perform even simultaneous sawing of granites and marbles.

This method at the same time allows the production of slabs that maintain their aesthetic pleasantness even if they are subjected to the action of humidity or atmospheric agents.

This is due not only to the fact of using shot that is made of stainless chromium steel, which as such is scarcely attackable by atmospheric agents or more generally by oxidizing chemicals, but most of all to the fact that said shot has a rounded shape and is not very hard, so as to perform sawing by means of a "soft" and uniform abrasion that is particuiarly suitable for soft or fissured marbles.

The surfaces of the resulting slabs are thus very smooth and therefore easily washable in an optimum manner.

At the same time, the hardness of the shot is such as to ensure optimum sawing even of the hardest granites.

The invention provided by way of this method therefore allows to cut all kinds of stones by using a single type of apparatus, with the consequent economic advantage of being able to reduce greatly the purchase and maintenance costs.

Accordingly, it is also possible to achieve optimum utilization of the machines, since the productions of marbles and granites are no longer independent and therefore market demand is more uniform and has fewer variations.

It is also possible to perform simultaneous sawing, in a single block, of marbles and granites, thus allowing to saturate to the maximum possible extent the capacity of each frame.

The method is of course susceptible of numerous modifications and variations, all of which are within the scope of the appended claims.

The materials used, as well as the dimensions that constitute the individual components, may be more pertinent according to the specific requirements.

The various means for performing certain different functions certainly need not coexist only in the illustrated embodiment but can be present per se in many embodiments, even those which are not illustrated.

The disclosures in Italian Patent Application No. TV2001A000155 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for obtaining an abrasive mixture, particularly for sawing stone, **characterized in that** it comprises, even in a different sequence, the steps of:
-- producing stainless chromium steel shot;
-- selecting said shot according to a chosen shape and size;
-- mixing said shot at least with a chosen amount of lime and water, so as to obtain said abrasive mixture.

2. The method according to claim 1, **characterized in that** said step for obtaining the stainless chromium steel shot provides for the production of a liquid phase that has a chromium content comprised between 8 and 30%.

3. The method according to claim 1, **characterized in that** said step for obtaining the stainless chromium steel shot provides for the production of a liquid phase that has a silicon content comprised between approximately 0.9% and 3%.

4. The method according to claim 1, **characterized in that** said step for obtaining the stainless chromium steel shot provides for a first pouring into a ladle of the resulting liquid phase, and from there a second slow pouring into a suitable granulation tank, in which there is at least one jet of high-pressure fluid that is suitable to reduce said poured molten steel to said stainless chromium steel shot.

5. The method according to claims 1 and 4, **characterized in that** said jet of fluid for the granulation of said poured molten steel is constituted by a jet of water at a pressure comprised between approximately 2 and 15 bar.

6. The method according to claims 1 and 4, **characterized in that** said jet of fluid for the granulation of said poured molten steel is constituted by a jet of air or of inert gas at a pressure comprised between approximately 0.5 and 3 bar.

7. The method according to claim 1, **characterized in that** said step of selecting said shot, is suitable to eliminate granules having average dimensions of less than approximately 0.2 millimeters.

8. The method according to claim 1, **characterized in that** said step of selecting said shot, is suitable to eliminate granules having average dimensions of more than approximately 1.4 millimeters.

9. The method according to claim 1, **characterized in that** said step for selecting said shot comprises a mechanical processing step that is suitable to eliminate granules having internal cavities or eddies that determine a lack of structural integrity.

10. The method according to claim 1, **characterized in that** said mixing step provides for the use of a limited quantity of clay-like material, such as bentonite.

11. The method according to claim 1, **characterized in that** said mixing step provides, in the sawing of marbles, the mixing of an amount of lime that is advantageously comprised between 2 and 3 grams per liter of water.

12. The method according to claim 1, **characterized in that** said mixing step provides, in the sawing of granites, the mixing of an amount of lime that is comprised between 15 and 20 grams per liter of water.

13. The method according to claim 1, **characterized in that** said mixing step provides, in the sawing of marbles, the mixing of an amount of steel shot that is comprised between 50 and 80 grams per liter of water.

14. The method according to claim 1, **characterized in that** said mixing step provides, in the sawing of granites, the mixing of an amount of steel shot that is comprised between 200 and 300 grams per liter of water.

15. The method according to one or more of the preceding claims, **characterized in that** it entails obtaining a chemical composition for said liquid phase, a pouring temperature, a jet of fluid on said poured metal and a mechanical treatment on said shot, so as to provide a stainless chromium steel shot that has a rounded and approximately potato-like shape.

16. The abrasive mixture particular for sawing stone, comprising an amount of lime and water, **characterized in that** it comprises shot that is advantageously potato-shaped and has maximum dimensions that are less than 1.4 millimeters and is made of stainless chromium steel.

17. The mixture according to claim 16, **characterized in that** it is constituted by a suspension of chromium steel shot in a saturated aqueous solution of calcium hydroxide.

18. The mixture according to one or more of the preceding claims, **characterized in that** it has an average viscosity lower than 2 the value of the viscosity of water.

19. The mixture according to one or more of the preceding claims, **characterized in that** it has an average density that is lower than 1.7 kilograms per cubic decimeter.

20. The mixture according to one or more of the preceding claims, **characterized in that** said stainless chromium steel shot has an average hardness lower than the value of 60 HRC.
